# EUROPEAN PATENT SPECIFICATION

(11) **EP 0 979 249 B1**
(45) Date of publication and mention of the grant of the patent: **30.07.2003**
(21) Application number: 98925584.9
(22) Date of filing: 01.05.1998
(51) Int. Cl.: C08G 81/00, C09D 5/02, B05D 7/14

(54) **PROCESS FOR PRODUCING A COATING COMPOSITION**
VERFAHREN ZUR HERSTELLUNG EINER BESCHICHTUNGSSTOFFZUSAMMENSETZUNG
PROCEDE DE PRODUCTION D'UNE COMPOSITION DE REVETEMENT

(30) Priority: 01.05.1997 GB 9708825; 01.05.1997 GB 9708823
(43) Date of publication of application: 16.02.2000
(73) Proprietor: Imperial Chemical Industries PLC, London W1U 3AN (GB)
(72) Inventor: WILLIAMS, Neal, Berkshire RG12 0XT (GB); CRAUN, Gary, P., Berea, OH 44107 (US); SMITH, Beth, A., Broadview Heights, OH 44147 (US)
(74) Representative: Cooper, Alan Victor
(86) International application number: EP9802787
(87) International publication number: WO98050452

(56) References cited:
- EP-A- 0 684 294
- BE-A- 854 476
- US-A- 5 389 703
- DATABASE WPI Section Ch, Week 7505 Derwent Publications Ltd., London, GB; Class A14, AN 75-08315W XP002082036 & JP 49 106586 A (SANYO CHEM IND LTD) , 9 October 1974

## Description

This invention relates to a process for producing an aqueous coating composition comprising an aqueous dispersion of crosslinked polymer microgel particles. The coating compositions are particularly useful as can coatings for beverage and food containers.

Industrial coatings are surface protective coatings (paint coatings) applied to substrates and typically cured or crosslinked to form continuous films for decorative purposes as well as to protect the substrate. A protective coating ordinarily comprises an organic polymeric binder, pigments, and various paint additives, where the polymeric binder acts as a fluid vehicle for the pigments and imparts rheological properties to the fluid paint coating. Upon curing or crosslinking, the polymeric binder hardens and functions as a binder for the pigments and provides adhesion of the dried paint film to the substrate. The pigments may be organic or inorganic and functionally contribute to opacity and color in addition to durability and hardness. Protective coatings which contain little or no opacifying pigments are described as clear coatings. The manufacture of protective coatings involves the preparation of a polymeric binder, mixing of component materials, grinding of pigments in the polymeric binder, and thinning to commercial standards.

Epoxy resins are particularly desirable for use in protective surface coating materials as a vehicle or polymeric binder for the pigments, fillers, and other additives where the epoxy resins advantageously provide toughness, flexibility, adhesion, and chemical resistance. Water-dispersed coating compositions containing epoxy resins are highly desirable for can coating compositions and particularly useful for interior surfaces of containers. Coatings for soft drink and beer cans, for instance, are critical because such coatings must not alter the product taste of beverages in the cans. Taste problems can occur in a variety of ways such as by leaching of coating components into the beverage, by absorption of flavor by the coating, sometimes by chemical reaction, or by some combination of these.

Can coating technology frequently utilizes an epoxy resin which has been grafted with acrylic monomers, styrene, and methacrylic acid. This grafted epoxy resin is prepared in solvent, usually butyl cellosolve, and n-butanol, to maintain low processing viscosities, and then dispersed in water. Although the cured film properties are highly desirable, such coatings suffer from the fact that sizable amounts of solvents are carried over from the process of producing the grafted epoxy resin into the final composition.

Epoxy based can coatings comprising a carbon grafted acrylic chain are disclosed in commonly assigned U.S. Patent No. 4,212,781 which teaches a carbon grafting process involving solvent polymerization at moderate temperatures with high levels of peroxide initiator to produce a carbon-graft polymer. The acrylic grafted epoxy is particularly useful when utilized with a coreactive crosslinking melamine crosslinker. Aqueous coating compositions based on microgel resin reaction product obtained by the esterification reaction of epoxy resin with a carboxyl group containing vinyl polymer are disclosed in U.S. Patent No. 4,897,434 where major amounts of high molecular weight epoxy are esterified in organic solvent with the carboxyl vinyl polymer to produce a non-gelled epoxy ester. The epoxy ester is subsequently dispersed into water followed by further coreacting of available epoxy and carboxyl groups on the preformed epoxy ester to form a microgel product. U.S. Patent No. 5,508,325 discloses aqueous dispersed microgel polymers produced by dispersing carboxyl functional acrylic-epoxy copolymer resin into water followed by dispersion of diepoxide and then crosslinking of the carboxyl copolymer by the diepoxide. Similar aqueous dispersed diepoxide crosslinked microgel polymeric compositions are disclosed in related patents U.S. 5,464,885, U.S. 5,554,671, U.S. 5,576,360 and U.S. 5,526,361.

JP-A-49 106586 discloses a method of producing a curable resin emulsion. The emulsion comprises polymer microparticles containing unreacted diepoxy compound, dispersed in water and made by dissolving the diepoxy compound in polymerisable monomers and effecting emulsion polymerization. The particles are not internally crosslinked and are thus not microgels. However, by adding to the emulsion a compound reactive with the epoxy groups immediately prior to application to a substrate followed by addition of catalyst and/or application of heat, such polymer microparticles can be used to produce cured films or externally crosslinked microgels.

In all of these prior art processes, the high solvent levels used in the production of the components of the composition invariably carry over to the aqueous dispersion when the resulting polymers are dispersed into water. In general, this produces compositions with a volatile organic content of at least about 100g/Kg of dispersion non-volatile content.

It now has been found that excellent aqueous dispersed protective coating compositions containing very low levels or zero levels of organic solvent, based on a polymeric binder comprising an aqueous dispersion of carboxyl functional addition polymer microgel particles which are internally crosslinked with a diepoxide resin, can be prepared through a novel process of making the microgel particles by emulsion polymerization of certain ethylenically unsaturated monomers and reacting the resulting polymer with a diepoxide. Making the microgel particles by this method wholly eliminates the inevitable inclusion of solvent which arises from the prior art methods and allows dispersions to be made which are essentially free of organic volatile material. Essentially solvent-free dispersions of this type were not previously possible without a laborious solvent stripping step. Although a small amount of solvent is sometimes added to these types of composition to improve application properties, the present invention allows one to start from an essentially solvent free composition and to add only the minimum amount of solvent required, rather than having to accept the quantity and type of solvent derived from the known methods of preparation.

According to the present invention there is provided a process for producing an aqueous coating composition comprising an aqueous dispersion of internally crosslinked polymer microgel particles in which the microgel particles are produced by emulsion polymerisation of ethylenically unsaturated monomers including carboxyl functional monomer in an aqueous medium so as to form an aqueous dispersion of carboxyl functional addition polymer followed by reacting this polymer dispersion with a diepoxide resin having an epoxide equivalent weight between 100 and 5000 to form the crosslinked polymer microgel particles.

A further advantage of the crosslinked polymer microgel particles made according to this process is that the compositions show reduced phase separation between the epoxy resin component and the addition polymer component in final coating films. These two types of component are not very compatible and often separate out in conventional compositions when they are heated after application so as to form a final coating film. This separation gives rise to separate microdomains of addition polymer and epoxy resin in the film. This can lead to a reduction in film performance because of the inherent weakness of the addition polymer component. While not being bound by this theory, it is believed that the process of the present invention leads to a greater degree of coreaction and interpenetrating crosslinking between the epoxy and acrylic components than in prior art processes and that morphological rearrangement and separation is thus prevented due to lack of mobility of the crosslinked components. Thus, highly desired uniform film formation can be achieved while the effects of inherent incompatibility between epoxide resins and acrylic latexes are avoided. The films exhibit excellent water resistance along with good clarity and gloss. The films are particularly suitable for application to metal food (including pet food) and beverage cans.

Emulsion polymerization of the ethylenically unsaturated monomers is carried out in the aqueous medium in the presence of a polymerisation initiator. It can generally be carried out by heating the monomers dispersed in the aqueous medium in the presence of a polymerisation initiator and a surfactant to a temperature at which the initiator initiates polymerization of the monomers. Most conveniently, the monomers are fed slowly into the aqueous medium together with, initiator, and optionally the diepoxide resin, the aqueous medium being held at a suitably elevated temperature such as 50 to 95°C, preferably 60 to 90°C throughout the monomer addition. The surfactant, which aids dispersion of the monomers can be added with the monomers, it can be dissolved in the aqueous medium, or, preferably, it can be divided between the two. Chain transfer agents, such as thiols, can also be included to control the molecular weight of the polymer and these are usually mixed in with the monomers. A short pre-polymerisation step in which a small proportion, for example 5 to 15%, of the monomers and other components is first added to the aqueous medium and polymerised so as to form a polymer seed before the bulk of the monomers and other components are added has been found to improve the consistency of the particle size distribution.

Preferably, the process is carried out in two stages in which in the first stage the ethylenically unsaturated monomers are polymerised in the presence of the diepoxide resin in the aqueous medium, and in the second stage the diepoxide resin is subsequently reacted with the resulting non-crosslinked carboxyl functional addition polymer in dispersion to form the crosslinked polymer microgel particles. This process allows relatively low levels of carboxyl functional monomer to be used and can result in polymers of relatively low acid value which tends to give films with better moisture resistance.

In this preferred method, the ethylenically unsaturated monomers are preferably premixed and added simultaneously with the diepoxide resin and the polymerizing initiator to the aqueous medium. More preferably the diepoxide resin is dissolved in the mixture of ethylenically unsaturated monomers which facilitates larger scale processing and lowers the level of coagulum. Dissolving the diepoxide resin in the monomers also facilitates the use of higher molecular weight or higher viscosity diepoxide resins.

A less preferred process can be carried out in three stages in which in the first stage the ethylenically unsaturated monomers are polymerised in the absence of the diepoxide resin so as to produce an aqueous dispersion of non-crosslinked carboxyl functional addition polymer, in the second stage the diepoxide resin is added and dispersed into the aqueous dispersion of non-crosslinked carboxyl functional addition polymer from the first stage, and in the third stage the diepoxide resin is reacted with the addition polymer to produce the crosslinked polymer microgel particles. In this second method, the ethylenically unsaturated monomers are premixed and added to the aqueous medium along with surfactant and polymerizing initiators as well as any other emulsion polymerization ingredients.

The aqueous medium is one which comprises water and optionally a water miscible organic solvent. Small quantities of organic solvent can be beneficial in some compositions in improving the wetting of the substrate surface or improving coalescence or flow-out of the particles and some or all of the required solvent can be included in the aqueous medium. However, the amount of such solvent is best kept as low as possible for environmental reasons. Preferably the level of organic solvent is kept low, such as below 2% by weight, or preferably below 0.5%, more preferably below 0.1% and most preferably there is substantially no organic solvent in the aqueous medium.

Initiators can include for example typical free radical and redox types such as hydrogen peroxide, t-butyl hydroperoxide, di-t-butyl peroxide, benzoyl peroxide, 2,4-dichlorbenzoyl peroxide, t-butylperacetate, azobisisobutyronitrile, ammonium persulphate, sodium persulphate, potassium persulphate, sodium and potassium perphosphates, and redox initiators such as mixtures of persulphate salt and sodium formaldehyde sulphoxylate, cumene hydroperoxide and sodium metabisulphite, potassium persulphate and sodium bisulphite or cumene hydroperoxide and ascorbic acid. Polymerization initiators are usually added in amounts between about 0.1 and 2% by weight of the monomers polymerized, preferably between 0.5 and 2%.

Suitable anionic surfactants include for example salts of fatty acids such as sodium and potassium salts of stearic, palmitic, oleic, lauric, and tall oil fatty acids, salts of sulphated fatty alcohols, salts of phosphoric acid esters of polyethoxylated long chain alcohols and phenols, as well as sulphosuccinates such as dihexyl, dioctyl, ditridecyl and dodecylbenzene sulphonate. Suitable non-ionic surfactants include polyoxyethylene glycols reacted to a lypophilic compound to produce a hydrophile lypophile balance (HLB) greater than 8 and preferably between 10 and 20, such as commercially known surfactants such as Triton™ surfactant, Igepal CA™ surfactant, and Tween™ surfactants. Preferred surfactants are FDA approved surfactants such as sodium dioctyl sulphosuccinate, sodium dodecyl sulphate or sodium dodecyl benzene sulphonate. A co-surfactant such as hexyl Cellosolve can be used to control and reduce particle size. Surfactants are usually added in amounts from 0.2 to 2% based on total polymer solids including diepoxide resin.

Ethylenically unsaturated monomers contain carbon to carbon double bond unsaturation and generally include vinyl monomers, styrene monomers, acrylic monomers, allylic monomers, acrylamide monomers, as well as carboxyl functional monomers. Vinyl monomers include vinyl esters such as vinyl acetate, vinyl propionate and similar vinyl lower alkyl esters, vinyl halides, vinyl aromatic hydrocarbons such as styrene and substituted styrenes, vinyl aliphatic monomers such as alpha olefins and conjugated dienes, and vinyl alkyl ethers such as methyl vinyl ether and similar vinyl lower alkyl ethers. Acrylic monomers include lower alkyl esters of acrylic or methacrylic acid having an alkyl ester chain from one to twelve carbon atoms as well as aromatic derivatives of acrylic and methacrylic acid. Useful acrylic monomers include for instance methyl, ethyl, butyl, and propyl acrylates and methacrylates, 2-ethyl hexyl acrylate and methacrylate, cyclohexyl, decyl, and isodecyl acrylates and methacrylates, and similar various acrylates and methacrylates. The carboxyl functional monomers can be acrylic and methacrylic acids, fumaric or maleic or similar unsaturated dicarboxylic acid, and the preferred carboxyl functional monomers are acrylic and methacrylic acid. The ethylenically unsaturated monomers comprise by weight between about 1% and 50% carboxyl functional monomers, preferably between 5% and 40%, most preferably between 10% and 35% with the balance being other ethylenically unsaturated monomers.

The carboxyl functional addition polymer is preferably made so as to have a weight average molecular weight between about 5 000 and 10 000 000 as measured by gel permeation chromatography (GPC), more preferably 10 000 to 100 000. The Tg or softening point of the addition polymer is preferably between 20 and 150°C as calculated by the Fox equation or measured by ASTM 3418-75, more preferably 30 to 80°C. The addition polymer preferably has a theoretical acid value between 50 and 195, more preferably 100 to 195.

Diepoxide crosslinking can be achieved by applying heat to increase the rate of the acid-epoxy crosslinking reaction. For example, the composition can be heated to between 50 and 95°C for between 0.5 and four hours. Although not preferred, crosslinking can occur at room temperature over a long period of time Catalysts such as tertiary amines, phosphines, and pyridine can be added at low levels (0.1 to 1%) to increase the acid-epoxy reaction rate.

Diepoxide resins useful for crosslinking the carboxyl functional addition polymer are predominantly linear chain molecules comprising the coreaction product of polynuclear dihydroxy phenols or bisphenols with halohydrins to produce diepoxide resins containing predominantly two epoxy groups per molecule. The most common bisphenols are bisphenol-A, bisphenol-F, bisphenol-S, and 4,4 dihydroxy bisphenol, with the most preferred being bisphenol-A. Halohydrins include epichlorohydrin, dichlorohydrin, and 1,2-dichloro- 3-hydroxypropane with the most preferred being epichlorohydrin. Preferred diepoxide resins comprise the coreaction product of excess molar equivalents of epichlorohydrin with bisphenol-A to produce predominantly an epoxy group terminated linear molecular chain of repeating units of diglycidyl ether of bisphenol-A containing between 2 and 25 repeating copolymerized units of diglycidyl ether of bisphenol-A. In practice, an excess molar equivalent of epichlorohydrin are reacted with bisphenol-A to produce diepoxide resins where up to two moles of epichlorohydrin coreact with one mole of bisphenol-A, although less than complete reaction can produce diepoxide resin along with monoepoxide chains terminated at the other end with a bisphenol-A unit. The preferred diepoxide resins are polyglycidyl ethers of bisphenol-A. These have terminating epoxide groups. They preferably have a number average molecular weight between 200 and 10,000 and more preferably from about 360 to 1,000 as measured by gel permeation chromatography (GPC). Commercially available lower molecular weight diepoxide resins include Dow Chemical epoxy resins identified by trade number and average molecular weights as follows: DER 333 (380)™; DER 661™ (1050); while Shell Chemical diepoxide resins are EPON 828™ (380); EPON 836™ (625); EPON 1001™ (1050); and Ciba-Geigy linear diepoxide resins GT-7013™ (1400); GT-7014™ (1500); GT-7074™ (2000) and GT-259™ (1200).

The preferred epoxy equivalent weight is between 100 and 5,000, more preferably between 100 and 1000 and most preferably between 180 and 500. High equivalent weight diepoxide resins do not disperse well, although blends containing minor amounts of higher molecular weight epoxy resins are workable. Diepoxide resins can include branched epoxies comprising branched chains where at least two of the chains contain terminal epoxide groups. Branched diepoxide resins having two or more terminal epoxide groups can be produced by coreacting epichlorohydrin with polynuclear polyhydroxy phenols, trifunctional phenols, or aliphatic trifunctional alcohols.

Diepoxide resins further include non-aqueous alkylene oxide resins which are epoxide functional resins comprising an alkylene oxide adduct of a bisphenol compound. The alkylene oxide is an aliphatic alkyl derivative having up to about 26 carbon atoms although preferred oxides are lower alkyl oxides such as ethylene, propylene, and butylene oxides. Bisphenol compounds include bisphenol-A, bisphenol-F and bissulphone or sulphides. Typically two or more moles of alkyl oxide are coreacted with one mole of bisphenol compound. Preferred compositions are 2:1 molar reactions while suitable molecular weight range of alkylene oxide resins is between 200 and 10,000 where preferred molecular weights are between 200 and 1,000 as measured by GPC.

Preferably the dispersion of crosslinked polymer microgel particles contains by non-volatile weight between 40% and 99%, preferably 50% and 95% carboxyl functional addition polymer based on the total amount of carboxyl functional addition polymer and diepoxide resin. Preferably the dispersed crosslinked polymer microgel particles have an average particle size below 5 µm, desirably less than 1 µm, and preferably less than 0.5 µm.

Preferably, the dispersion of crosslinked polymer microgel particles has an acid value above 30, preferably between 50 and 200 based on non-volatile weight of the microgel particles.

Preferably the process includes adding a base so as to at least partially neutralize the carboxyl groups on the addition polymer. The neutralization of the carboxylic acid groups gives the dispersion greater colloidal stability. The addition of a base causes an increase in the low shear viscosity of the composition and allows viscosity control and adjustment to a desired level. Not only that, but addition of base causes the microgel particles to swell. The swollen microgel particles are pseudoplastic, that is, their low shear viscosity is higher than their high shear viscosity. The level of pseudoplasticity, that is the difference between low and high shear viscosity, rises with increasing addition of base. Pseudoplasticity is a very useful property of a coating composition because it can cause the viscosity to be low at high shear rates, such as at a spray nozzle, thus giving good spray atomization and high at low shear rates such as on a substrate thus giving a low degree of sagging or running of the wet coating.

Ammonia or an amine, such as dimethylethanolamine, or mixtures thereof are the preferred bases, while hydroxyl bases, such as alkali metal hydroxides are useful but less preferred. Preferably, the amount of base present is such as to be capable of neutralizing between 50% and 100% of the carboxyl groups based on the theoretical acid content of the carboxyl functional addition polymer as made. On a weight basis the composition typically comprises between 1% and 10% , and preferably between 2 and 5% of base, based on the polymeric weight of the polymer microgel particles.

The base can be added with and mixed with ordinary agitation at the completion of the carboxyl functional addition polymer formation or after the diepoxide crosslinking step. Certain bases, such as tertiary amines can act both to catalyse the diepoxide crosslinking reaction and to partially neutralise the carboxyl groups. The base ordinarily is diluted with water to control viscosity during the mixing and swelling process. When the preferred two-stage process outlined above is used, the base is preferably added after the diepoxide resin has been reacted with the carboxyl functional addition polymer. This effectively allows the viscosity and pseudoplasticity of the composition to be adjusted after the dispersion of crosslinked polymer microgel particles has been made, merely by adding base. This is very much more convenient than having to adjust the composition of the dispersion during its manufacture and then having to make a new dispersion if the viscosity characteristics are not those desired.

When the microgel particles are made by the less preferred three-stage method outlined above, the base is preferably added after formation of the non-crosslinked addition polymer dispersion and before the diepoxide resin is added.

Previous methods of producing similar polymer dispersions have inevitably resulted in a certain amount of solvent being present in the final composition, the solvent being carried over from the method of producing one or more of the components. Compositions of this type which have a volatile organic content of less than 100g/Kg based on non-volatile polymer content are new.

According to the process of the present invention there is provided an aqueous coating composition having a volatile organic content of less than 100g/kg based on non-volatile polymer content, comprising an aqueous dispersion of crosslinked polymer microgel particles, the polymer microgel particles comprising a carboxyl functional addition polymer which is crosslinked with a diepoxide resin having an equivalent weight between 100 and 5000.

Preferably the composition as made according to the process of the present invention contains at most 30g of volatile organic material per kg of composition, more preferably less than 10g, most preferably less than 1g.

In one further aspect of the invention, when the less preferred three stage process is used then an acrylic-epoxy carboxyl functional copolymer can be mixed with the aqueous dispersion of carboxyl functional copolymer before it is reacted with the diepoxide resin. This has been found to assist the dispersion of the diepoxide resin into the addition polymer.

The acrylic-epoxy copolymer is a copolymer comprising epoxy resin coreacted with ethylenic monomers including carboxyl monomers to produce an epoxy-acrylic copolymer. The preferred epoxy-acrylic copolymer comprises an epoxy-acrylic graft copolymer containing epoxy resin, epoxy-acrylic graft copolymer, and ungrafted addition polymer produced by polymerising ethylenically unsaturated monomers in-situ with epoxy resin in the present of a peroxide. The in-situ polymerisation of monomers generally comprises reacting the ethylenically unsaturated monomers in the presence of epoxy with about 1% to 10% peroxide by weight based on the monomer copolymerised. The in-situ formed carboxyl-functional copolymer can have a molecular weight between 1,000 and 100,000 and preferably between 2,000 and 20,000. The carboxyl content (COOH) should comprise at least 5% by weight of the monomer mixture and preferably should be above 15%. The Acid Number should be above 30 and preferably between 70 and 300 mg KOH per gram of resin solids. Based on the weight of the acrylic-epoxy copolymer, the copolymerised acrylic or methacrylic acid content preferably is between 5% and 40% by weight of the copolymer.

The epoxy resin portion of the epoxy-acrylic copolymer mixture can be either aliphatic or aromatic, although the aromatic epoxy resins are preferred. The most preferred epoxy resins are polyglycidyl ethers of bisphenol-A, especially those having 1,2-epoxy equivalency of from about 1.3 to about 2. The molecular weight should be from about 350 to about 20,000 and preferably, for sanitary coating compositions, from about 2,000 to about 10,000. Mixtures of monoepoxides and diepoxides are desirable. Another procedural variation is the introduction of the aromatic polyether which is devoid of oxirane functionality by reacting epoxide groups with benzoic acid, fatty acid, phenol or similar monoreactive epoxide blocking agent. In preferred practice, the epoxy resin is a mixture including aromatic polyether having a single oxirane group and aromatic polyether having two oxirane groups which maximizes compatibility.

Epoxy resins are predominantly linear chain molecules comprising the coreaction product of polynuclear dihydroxy phenols or bisphenols with halohydrins to produce epoxy resins containing at least one and preferably two epoxy groups per molecule. The most common bisphenols are bisphenol-A, bisphenol-F, bisphenol-S, and 4,4'dihydroxy bisphenol, with the most preferred being bisphenol-A. Halohydrins include epichlorohydrin, dichlorohydrin, and 1,2-dichloro 3-hydroxypropane with the most preferred being epichlorohydrin. Preferred epoxy resins comprise the coreaction product of excess molar equivalents of epichlorohydrin and bisphenol-A to produce predominantly an epoxy group terminated linear molecular chain of repeating units of diglycidyl ether of bisphenol-A containing between 2 and 25 repeating copolymerised units of diglycidyl ether of bisphenol-A. In practice, an excess molar equivalent of epichlorohydrin are reacted with bisphenol-A to produce epoxy resins where up to two moles of epichlorohydrin coreact with one mole of bisphenol-A, although less than complete reaction can produce difunctional epoxy resin along with monoepoxide chains terminated at the other end with a bisphenol-A unit. The most preferred linear epoxy resins are poly-glycidyl ethers of bisphenol-A having terminating 1,2-epoxide groups and an epoxy equivalent weight between 2,000 and 10,000, and a number average molecular weight from about 4,000 to 20,000 as measured by gel permeation chromatography (GPC). Commercially available epoxy resins include Dow Chemical epoxy resins identified by trade number and equivalent molecular weights as follows: DER 661 (525); DER 664 (900); while Shell Chemical epoxy resins are EPON 1001 (525); EPON 1007 (2000); EPON 1009F (3000); and Ciba-Giegy linear epoxy reins GT-7013 (1400); GT-7014 (1500); GT-7074 (2000); and GT-259 (1200). Although not as common, trifunctional epoxy resins are useful comprising branched chain epoxy resins where the branched chains as well as the backbone chain are each terminated with a terminal epoxide groups to provide greater than two epoxide functionality. Trifunctional epoxy resins can be produced by coreacting epichlorohydrin with polynuclear polyhydroxy phenols, trifunctional phenols, or aliphatic trifunctional alcohols.

The acrylic component of the epoxy-acrylic copolymer comprises polymerised ethylenically unsaturated monomers which include carboxyl functional monomers such as acrylic acid, and lower alkyl substituted acrylic acids such as methacrylic acid, and unsaturated dicarboxylic acids such as maleic or fumaric, to provide carboxyl functionality means for dispersing the epoxy-acrylic copolymer mixture into water. The preferred acrylic acid is methacrylic acid. The balance of the monomers preferably are nonreactive under the contemplated conditions of polymerisation, although small amounts of other reactive monomers may be used such as hydroxy monomers illustrated by 2-hydroxy ethyl methacrylate, amide monomers illustrated by acrylamide, or N-methylol monomers illustrated by N-methylol acrylamide. The remaining monomers are nonreactive but copolymerisable ethylenic monomers illustrated by acrylate and methacrylate esters, such as ethyl acrylate, methyl methacrylate or isobutyl methacrylate, styrene, or vinyl toluene, vinyl acetate, vinyl chloride, vinylidene chloride, acrylonitrile, and generally alkyl esters of any acrylic acid, generally the lower alkyl esters, that is, those ester in which the esterifying group contains from 1 to 4 carbon atoms, and particularly ethyl acrylate. Other useful monomers in this class include other C₁₋₁₅ alkyl acrylate esters and methacrylate esters such as, for example, propyl acrylate, isopropyl acrylate, butyl acrylate, isobutyl acrylate, tertiary butyl acrylate, pentyl acrylate, decyl acrylate, lauryl acrylate, isobomyl acrylate, methyl methacrylate, butyl methacrylate, isobutyl methacrylate, hexyl methacrylate, 2-ethyl hexyl methacrylate, octyl methacrylate, and nonyl methacrylate. Other useful monomers are those readily commercial available monomers having vinyl unsaturation and include styrenic monomers such as styrene, vinyl toluene, divinyl benzene, isoprene and butadience. The acrylic, methacrylic or similar unsaturated carboxyl monomer preferably comprises by weight between about 5% and 40% based on the weight of the acrylic grafted epoxy copolymer. Based on monomer weights copolymerised, the preferred acrylic acid or methacrylic acid monomer should comprise between 5% and 99% of the monomer copolymerised.

The preferred epoxy-acrylic copolymer mixture is prepared by in-situ non-aqueous polymerisation of the ethylenic monomers with epoxy resin. The epoxy resin can be heated in the absence of water in a reactor wherein the polymerisable monomer can be added slowly over a period of at least two or three hours along with a solvent and a free radical initiator. Although the reaction may be conducted in the absence of solvent, a solvent is preferred for the in-situ polymerisation of monomers in the presence of epoxy resin. Solvents such as xylene, benzene, ethyl benzene, toluene, and the alkoxy alkanols are satisfactory. Alcohols such as methanol, ethanol, propanol, and butanol are suitable, with butanol being preferred. Ethylene glycol monobutyl ether, ethylene glycol monohexyl ether, ethylene glycol monobutyl ether acetate, and the like, hexane, mineral spirits and the lime, are also suitable. For subsequent dispersion into water, the solvents selected should be water-soluble materials, as are acetone, butanol, ethanol, propanol, and ethylene glycol monoethyl ether. Ordinarily the amount of solvent may be in the range from about 5% and 40% by weight of the sum of the other components.
In practice, the epoxy resin and the mixture of polymerisable monomers are reacted together in the presence of a free radical initiator, preferably of the peroxide type, and benzoyl peroxide t-butyl perbenzoate are most preferred. Typically and useful free radical initiators include cumene hydroperoxide, benzoyl peroxide t-butyl perbenzoate, t-butyl peroxide, lauryl peroxide, methyl ethyl ketone peroxide, dicumyl peroxide, chlorobenzoyl peroxide, and the like. Benzoyl peroxide and t-butyl perbenzoate are preferred as the free radical initiator. The amount of free radical catalyst is expressed in terms of percentage by weight of peroxide based on the total weight of the polymerisable monomer, or equivalent, at the temperature of use. The amount of peroxide catalyst should be at least about 1% and preferably between 2% and 10% by weight peroxide initiator based on the weight of ethylenic monomers copolymerised. The monomers and initiators are heated at a reaction temperature preferably maintained in the range from about 80°C to about 180°C, although the temperature may be adjusted within a relatively wide range to accommodate the reactivity of the mixture. Operating temperatures in the range from about 30°C to about 200°C are feasible, depending upon the end results and operating conditions selected, although the preferred temperature range is between 100°C and 150°C. After the monomers are added, the reaction mixture is normally held for up to three hours at reaction temperature to complete the monomer conversions. The in-situ polymerisation of the monomers produces an in-situ formed carboxyl functional polymer containing at least about 5% of polymerised acid monomer based on the total weight of monomers. The acrylic-epoxy copolymer should have an Acid Number above about 30 and preferably between 70 and 300 mg KOH per gram of polymer. The epoxy-acrylic copolymer composition comprises by weight between about 20% and 95% acrylic polymer and between about 5% and 80% epoxy resin. The epoxy-acrylic copolymer is prepared insolvent and then subsequently dispersed into water using a fugitive base such as primary, secondary, and tertiary alkyl, alkanol, aromatic amines, or alkanolalkyl mixed amines such as mono-ethanol amine, dimethyl ethanol amine, diethanol amine, triethyl amine, dimethyl aniline, and ammonium hydroxide, as more particularly described in U.S. Pat. No. 4,212,781.

When an acrylic-epoxy copolymer is added, the internally crosslinked polymer microgel particles preferably comprise by weight between 1% and 95 % carboxyl functional addition polymer, between 1 and 95 % acrylic-epoxy copolymer with the balance being diepoxide resin.

In a still further aspect of this invention, phenolic resins can be added to the polymeric composition to provide additional chemical resistance. The phenolic can then be premixed with the ethylenically unsaturated monomer and diepoxide resin and emulsified in water with surfactant prior to aqueous copolymerization. Useful phenolic resins are those essentially soluble in ethylenic monomers, preferably in acrylic monomers, and comprise alkyl substituted resol or novolac phenolic resins. Straight phenol formaldehyde resins for instance ordinarily are not soluble in acrylic monomers and do not work satisfactorily. The ethylenically unsaturated monomers serve as a carrier solvent subsequently copolymerized to provide an in-situ formed emulsion copolymer. The liquid solution of diepoxide resin and phenolic is then emulsified and the monomers aqueous copolymerized using a thermal or redox initiator system. A ratio between 16:4:80 and 48:12:40 of diepoxide: phenolic: ethylenically unsaturated monomers has been found useful, where an optimal ratio is approximately 40:10:50 diepoxide: phenolic: ethylenically unsaturated monomers. Although not preferred, a suitable co-solvent can be added to the mixture which adds VOC to the coating composition.
Other components can include additional crosslinkers such as melamine formaldehydes, slip aids, waxes, antifoaming agents and surfactants.

The resulting aqueous coating composition can be applied satisfactorily by conventional methods known in the coating industry. Thus, spraying, rolling, dipping, and flow coating application methods can be used for both clear and pigmented films, although spraying is preferred and pseudoplastic compositions made according to the present invention are particularly suitable for spray application.

For spraying, preferably the coating composition contains between about 10% and 30% by weight polymeric solids relative to 90% to 70% water including other volatiles such as minimal amounts of solvents, if desired. For applications other than spraying, the aqueous polymeric dispersions can contain between about 10% and 40% by weight polymer solids. Organic solvents can be utilized if desired to facilitate spray or other application methods and such solvents include hexyl Cellosolve™, n-butanol, 2-butoxy-ethanol-1, xylene, toluene, and preferably n-butanol is used in combination with 2-butoxy-ethanol-1. The low level of solvent in the compositions as made allows a freer choice of solvents in the final composition. The coating composition of the present invention can be pigmented and/or opacified with known pigments and opacifiers. For many uses, including food use, the preferred pigment is zinc oxide. The compositions obtained according to the process of the present invention are particularly useful for coating metal food or beverage cans. After application onto the metal substrate, the coating is cured thermally at temperatures in the range from about 150°C to 220°C or higher, for sufficient time to effect complete curing as well as volatilizing of any fugitive component in the liquid coating, for example for 1 to 10 minutes.

For metal sheet substrates intended as beverage containers and particularly for carbonated beverages such as beer, the coating should be applied at a film thickness of 1 to 20, preferably 3 to 10 µm.

For a better understanding of the present invention, the following examples are provided wherein all parts are parts by weight, all percentages are weight percentages, and temperatures are degrees Centigrade, unless otherwise expressly indicated.

### Example 1

An aqueous dispersed epoxy acrylic microgel polymeric binder was produced as follows.

| Component | | Weight (parts) |
|---|---|---|
| A. | Demineralized water | 13.07 |
| | Aerosol OT 75™ (dioctyl sulphosuccinate, 75%) | 0.04 |
| | | |
| B. | Styrene | 4.50 |
| | Ethyl acrylate | 3.38 |
| | Methacrylic acid | 3.38 |
| | N-octyl mercaptan | 0.23 |
| | Aerosol OT 75™ | 0.06 |
| | | |
| C. | Demineralized water | 0.41 |
| | Ammonium persulphate | 0.06 |
| | | |
| D. | Demineralized water | 0.81 |
| | Ammonium persulphate | 0.11 |
| | | |
| E. | Demineralized water | 15.81 |
| | dimethylethanol amine | 1.13 |
| | Aqueous ammonia (28%) | 1.71 |
| | | |
| F. | Epikote 880™ (diepoxide, equivalent weight 182-192 molecular weight 380) | 4.68 |
| | | |
| G. | Hot (80°C) Demineralized water | 50.62 |

Component A was heated to 80°C under a nitrogen blanket in a reaction vessel equipped with a propeller type stirrer. 10% by weight of feed B was added to the reaction vessel as a seed stage and held at 80°C for about 10 minutes. Seed initiator solution C was added and the reaction mixture temperature was increased to 85°C and held for about 30 minutes. The remainder of feed B along with feed initiator D were added uniformly over a three hour period while holding the reaction temperature at about 85°C. After the feed was complete, the reaction was held at 85°C for one hour. The reactants were diluted with water by adding component E, whereupon the mixture temperature was adjusted to 60°C and then held for one hour. The amount of amine and ammonia base was sufficient to neutralize approximately 71% of the available carboxyl groups on the addition polymer. Liquid diepoxide resin F was then added to the reaction mixture with vigorous stirring followed by holding the mixture at 60°C for 10 minutes. Hot demineralized water G was added to reduce the non-volatile solids content to about 20% by weight. The reaction mixture was adjusted to 90°C and held for two hours at 90°C. The resulting aqueous dispersion of crosslinked polymer microgel particles was cooled to 30°C and then filtered through 80 µm nylon mesh. The resulting aqueous dispersion of crosslinked polymer microgel particles comprised by weight 29.4% diepoxide resin and 70.6% addition polymer. The addition polymer had a calculated Tg of 73°C and a theoretical acid value of 194 mg KOH/g of polymer. The resulting polymeric composition was applied to a substrate as a coating, heat cured, and exhibited excellent cured protective film properties.

### Example 2

An epoxy phenolic acrylic water dispersed microgel polymeric binder was produced as follows.

| Component | | Weight (parts) |
|---|---|---|
| A. | Demineralized water | 18.667 |
| | Aerosol™ OT 75 | 0.052 |
| | | |
| B. | Styrene | 6.428 |
| | Ethyl acrylate | 4.821 |
| | Methacrylic acid | 4.821 |
| | N-octyl mercaptan | 0.320 |
| | Aerosol OT 75™ | 0.104 |
| | | |
| C. | Demineralized water | 0.580 |
| | Ammonium persulphate | 0.082 |
| | | |
| D. | Demineralized water | 1.157 |
| | Ammonium persulphate | 0.160 |
| | | |
| E. | Demineralized water | 22.320 |
| | Aqueous Ammonia (28%) | 2.195 |
| | | |
| F. | Epikote 1001™ (diepoxide, equivalent weight 450-500 molecular weight 1000) | 13.875 |
| | Schenectady SP 103™ (phenolic) | 3.468 |
| | Butyl Cellosolve™ (ethylene glycol mono butyl ether) | 4.336 |
| | | |
| G. | Hot (80°C) demineralized water | 16.614 |

The components A through E inclusive were added and processed in the same manner as Example 1. The ammonia in component E was sufficient to neutralize about 64% of the carboxyl groups of the addition polymer. Component F consisted of a preformed solution of diepoxide resin and phenolic in butyl Cellosolve at 80°C. Heated solution F was added to the reactants and the reaction mixture was held for 10 minutes. Hot demineralized water G was then added to the reaction mixture to reduce the non-volatile solids content. The reaction mixture was then heated to 90°C. and held for two hours. The resulting aqueous dispersion of crosslinked polymer microgel particles was then cooled to 30°C and filtered through 80 µm nylon mesh. The crosslinked polymer microgel particles consisted by weight ratio 41.5:10.5:48 epoxy:phenolic:addition polymer with a volatile organic content of 100 g/Kg polymeric solids. The addition polymer had a calculated Tg of 73°C, a theoretical acid value of 194 mg KOH/g of polymer solids. The aqueous dispersion of crosslinked polymer microgel particles produced an excellent protective coating in the manner of Example 1.

### Example 3

An aqueous dispersion of crosslinked polymer microgel particles was produced as follows.

| Component | | Weight (parts) |
|---|---|---|
| A. | Demineralized water | 18.667 |
| | Aerosol OT 75™ | 0.052 |
| | | |
| B. | Styrene | 6.428 |
| | Ethyl acrylate | 4.821 |
| | Methacrylic acid | 4.821 |
| | N-octyl mercaptan | 0.320 |
| | Aerosol OT 75™ | 0.104 |
| | | |
| C. | Demineralized water | 0.580 |
| | Ammonium persulphate | 0.082 |
| | | |
| D. | Demineralized water | 1.157 |
| | Ammonium persulphate | 0.160 |
| | | |
| E. | Demineralized water | 22.320 |
| | Aqueous ammonia (28%) | 2.195 |
| | | |
| F. | Epikote 1001™ | 13.875 |
| | Schenectady SP 103™ (phenolic) | 3.468 |
| | Butyl acrylate | 2.168 |
| | Styrene | 2.168 |
| | | |
| G. | Demineralized water | 16.581 |
| | Ammonium persulphate | 0.033 |

The above components A through E inclusive were processed in the same manner as *in* Example 2. The ammonia was sufficient to neutralize about 64% of the carboxyl groups on the emulsion copolymer and to give an acidic pH. Component F consisting of the epoxy/phenolic in a solution was added hot (80°C.) to the addition polymer reaction mixture and held for 10 minutes. Hot component G (80°C) was added to dilute the composition and polymerise the additional monomers. The reaction temperature was increased to 90°C, held for two hours, and then cooled to 30°C. The resulting crosslinked microgel dispersion was then filtered through an 80 µm nylon mesh. The resulting dispersion of crosslinked polymer microgel particles consisted by a weight ratio 36.7:9.2:54.1 of epoxy:phenolic:addition polymer and had a volatile organic content of zero. The addition polymer had a theoretical Tg of 73°C, and a calculated acid value of 194mgKOH/g of polymer. An excellent protective coating film was produced.

### Example 4

A aqueous dispersion of crosslinked polymer microgel particles was produced as follows.

| Component | | Weight (parts) |
|---|---|---|
| A. | Demineralized water | 20.106 |
| | Aerosol OT 75™ | 0.093 |
| | | |
| B. | DER 331™ (diepoxide, equivalent weight 182-192) | 8.634 |
| | Styrene | 8.058 |
| | Ethyl acrylate | 8.058 |
| | Methacrylic acid | 4.029 |
| | Aerosol OT 75™ | 0.187 |
| | N-octyl mercaptan | 0.101 |
| | Demineralized water | 13.324 |
| | | |
| C. | Demineralized water | 1.039 |
| | Ammonium persulphate | 0.067 |
| | | |
| D. | Demineralized water | 2.072 |
| | Ammonium persulphate | 0.133 |
| | | |
| E. | Demineralized water | 6.262 |
| | dimethylethanolamine | 0.421 |
| | | |
| F. | Demineralized water | 13.324 |
| | | |
| G. | Demineralized water | 12.658 |
| | Aqueous ammonia (28%) | 1.434 |

The components were processed in the same manner as Example 1 except that the diepoxide was included in the monomer feed mixture and the ammonia base neutralization was in the final thinning stage G to adjust the pH to 8.5. The ammonia was sufficient to neutralize about 50% of the carboxyl groups on the addition polymer. The resulting crosslinked polymer microgel particles consisted by weight ratio of 30% diepoxide and 70% addition polymer. The addition polymer had a theoretical Tg of 51°C. and a calculated acid value of 130mgKOH/g of polymer. The dispersion of crosslinked polymer microgel particles produced an excellent cured protective coating.

### Example 5

| Component | | Weight (parts) |
|---|---|---|
| A. | Demineralized water | 39.186 |
| | Aerosol OT 75™ | 0.109 |
| | | |
| B. | Epikote 880™ diepoxide resin | 10.121 |
| | Schenectady SP 103™ phenolic | 1.996 |
| | Styrene | 10.627 |
| | Ethyl acrylate | 10.627 |
| | Methacrylic acid | 2.361 |
| | Aerosol OT 75™ | 0.219 |
| | N-octyl mercaptan | 0.118 |
| | | |
| C. | Demineralized water | 1.218 |
| | Ammonium persulphate | 0.172 |
| | | |
| D. | Demineralized water | 2.429 |
| | Ammonium persulphate | 0.336 |
| | | |
| E. | Demineralized water | 13.275 |
| | Aqueous ammonia (28%) | 1.199 |
| | Dimethyl aminoethanol | 0.195 |
| | | |
| F. | Demineralised water | 12.123 |

Mixture A was heated to 80°C in a 2 litre vessel fitted with turbine stirrer, condenser and nitrogen feed. 10% of mixture B was added with stirring, the mixture was stirred for 10 minutes, mixture C was added and the temperature raised to 85°C for 30 minutes. The remains of mixture B and mixture D were fed in over 3 hours at 85°C and held at that temperature for 30 minutes. Mixture E was added over 30 minutes, F was added immediately and the mixture stirred at 85°C for 1 hour. The mixture was cooled to 30°C and filtered through 50µm nylon mesh. The solids content of the resulting aqueous dispersion of crosslinked polymer microgel particles was 34.5% (after heating at 150°C for 1 hour to drive off volatiles) and the average particle size was 0.34µm (as measured using a Malvern Mastersizer™)

### Example 6

| Component | | Weight (parts) |
|---|---|---|
| A. | Demineralized water | 39.447 |
| | Aerosol OT 75™ | 0.110 |
| | | |
| B. | Epikote 880™ diepoxide resin | 10.188 |
| | Styrene | 8.320 |
| | Ethyl acrylate | 8.320 |
| | Methacrylic acid | 7.132 |
| | Aerosol OT 75 | 0.220 |
| | N-octyl mercaptan | 0.119 |
| | | |
| C. | Demineralized water | 1.226 |
| | Ammonium persulphate | 0.173 |
| | | |
| D. | Demineralized water | 2.445 |
| | Ammonium persulphate | 0.338 |
| | | |
| E. | Demineralized water | 13.364 |
| | Dimethyethanolamine | 0.385 |
| | | |
| F. | Demineralised water | 12.73 |

Mixture A was heated to 80°C in a 2 litre vessel fitted with turbine stirrer, condenser and nitrogen feed. 10% of mixture B was added with stirring, the mixture was stirred for 10 minutes, mixture C was added and the temperature raised to 85°C for 30 minutes. The remains of mixture B and mixture D were fed in over 3 hours at 85°C and held at that temperature for 30 minutes. Mixture E was added over 30 minutes, F was added immediately and the mixture stirred at 85°C for 1 hour. The mixture was cooled to 30°C and filtered through 50µm nylon mesh. The solids content of the resulting aqueous dispersion of crosslinked polymer microgel particles was 32.2% (after heating at 150°C for 1 hour to drive off volatiles), the pH of the composition as made was 5.0.

Samples of this composition were further neutralised with ammonia to 60, 70 and 80% of theoretical degree of neutralisation based on the number of carboxyl groups initially on the addition polymer and the solids content adjusted with demineralised water to 30%. The low shear and high shear viscosities were measured to get an indication of the pseudoplasticity of the compositions. Low shear viscosity was measured by Brookfield viscometer using a number 3 spindle at 6 rpm. High shear viscosity was measured by ICI cone and plate viscometer. Average particle size was measured using a Malvern Mastersizer™.

| Theoretical D of N (%) | pH | Particle size (microns) | Low shear viscosity (Poise) | High Shear viscosity (Poise) |
|---|---|---|---|---|
| 60 | 8.9 | 0.29 | 16 | 0.11 |
| 70 | 9.4 | 0.32 | 20 | 0.1 |
| 80 | 9.6 | 0.33 | 30 | 0.09 |

It can be seen from these results that the low shear viscosity rises with added base and that the particles swell. The high shear viscosity is little affected and the compositions thus show a greater degree of pseudoplasticity with increasing amounts of added base.

### Example 7

| Component | | Weight (parts) |
|---|---|---|
| A. | Demineralized water | 39.161 |
| | Aerosol OT 75™ | 0.215 |
| | | |
| B. | Epikote 880™ diepoxide resin | 10.114 |
| | Styrene | 10.620 |
| | Ethyl acrylate | 10.620 |
| | Methacrylic acid | 2.360 |
| | Aerosol OT 75™ | 0.437 |
| | N-octyl mercaptan | 0.118 |
| | | |
| C. | Demineralized water | 1.217 |
| | Ammonium persulphate | 0.172 |
| | | |
| D. | Demineralized water | 2.427 |
| | Ammonium persulphate | 0.336 |
| | | |
| E. | Demineralized water | 13.267 |
| | Aqueous ammonia (28%) | 0.974 |
| | Dimethylethanolamine | 0.158 |
| | | |
| F. | Demineralised water | 7.804 |

Mixture A was heated to 80°C in a 2 litre vessel fitted with turbine stirrer, condenser and nitrogen feed. 10% of mixture B was added with stirring, the mixture was stirred for 10 minutes, mixture C was added and the temperature raised to 85°C for 30 minutes. The remains of mixture B and mixture D were fed in over 3 hours at 85°C and held at that temperature for 30 minutes. Mixture E was added over 30 minutes, F was added immediately and the mixture stirred at 85°C for 1 hour. The mixture was cooled to 30°C and filtered through 50µm nylon mesh. The solids content of the resulting aqueous dispersion of crosslinked polymer microgel particles was 33.4% (after heating at 150°C for 1 hour to drive off volatiles) and the average particle size was 0.36µm (as measured using a Malvern Mastersizer™)

### Example 8

| Component | | Weight (parts) |
|---|---|---|
| A. | Demineralized water | 23.441 |
| | Aerosol OT 75™ | 0.093 |
| B. | DER 331 diepoxide resin | 8.635 |
| | Schenectady SP 1068™ phenolic | 2.878 |
| | Styrene | 6.908 |
| | Ethyl acrylate | 6.908 |
| | Methacrylic acid | 3.454 |
| | Aerosol OT 75™ | 0.187 |
| | N-octyl mercaptan | 0.101 |
| | Demineralised water | 9.995 |
| C. | Demineralized water | 1.039 |
| | Ammonium persulphate | 0.067 |
| D. | Demineralized water | 2.072 |
| | Ammonium persulphate | 0.133 |
| E. | Demineralized water | 6.263 |
| | Dimethylethanolamine | 0.416 |
| F. | Hot Demineralised water (60°C) | 13.326 |
| G. | Demineralised water | 12.660 |
| | Aqueous ammonia (28%) | 1.423 |

Oil-in-water emulsion B was made by premixing the organic components and stirring until the phenolic resin had dissolved and then slowly adding the water while emulsifying using a Silverson Homogeniser™. Mixture A was heated to 80°C in a 2 litre vessel fitted with turbine stirrer, condenser and nitrogen feed. 10% of emulsified mixture B was added with stirring, the mixture was stirred for 10 minutes and mixture C was added. The temperature raised to 85°C for 30 minutes. The remains of mixture B and mixture D were fed in over 3 hours at 85°C and held at that temperature for 30 minutes. Mixture E was added over 30 minutes, F was added immediately and the mixture stirred at 85°C for 1 hour. G was added, the mixture was cooled to 30°C and filtered through 50µm nylon mesh. The solids content of the resulting aqueous dispersion of crosslinked polymer microgel particles was 25.6% (after heating at 150°C for 1 hour to drive off volatiles) and the average particle size was 0.52µm (as measured using a Malvern Mastersizer™)

### TEST RESULTS

5% by weight of butyl Cellosolve was added to coating compositions 5 to 9 which were were then applied to tin plate using a No.22 Meyer wire wound bar and stoved for 10 minutes at 205°C. The test panels were crosshatch cut using a template with 2mm spacings and immersed in boiling demineralised water for 30 minutes for the water boil test or 5% aqueous acetic acid for 30 minutes for the acid test. Adhesion was assessed after immersion by drying the panel and applying and removing Scotch™ 610 tape (from 3M). Blush was very slight to none for each cured film.

Solvent resistance was assessed using the MEK rub test. This involved rubbing the surface of the coating film with the soft surface of a piece of cloth which was folded in four, attached to a the ball end of a 650g ball pein hammer, and soaked in methylethyl ketone. The soaked flannel is drawn back and forth across the surface of the film under the weight of the hammer with one back and forth movement being counted as one double rub. The strokes are 100-150mm in length and the stroke rate 30 +/- 5 double strokes per minute. When the substrate is first exposed, rubbing is dicontinued and the number of rubs recorded.

The results were as follows.

| Composition (Film Build) | Acetic Acid | | Water Boil | | MEK Double Rubs |
|---|---|---|---|---|---|
| | Blush | Adhesion | Blush | Adhesion | |
| 5 (8µm) | 1 | 0 | 1 | 0 | 60-70 |
| 6 (6µm) | 0 | 0 | 0-1 | 0-20 | 280 |
| 7 (8µm) | 1 | 0-20 | 1 | 0-20 | 80 |
| 8 (7.5µm) | 1 | 100 | 1 | 100 | 100 |
| Blush Ratings; 0 = no effect 2-3 = moderate blush 5 = heavy blush | | | | | |

Adhesion Ratings represent the percentage of film removed

## Claims

1. A process for producing an aqueous coating composition comprising an aqueous dispersion of internally crosslinked polymer microgel particles in which the microgel particles are produced by emulsion polymerisation of ethylenically unsaturated monomers including carboxyl functional monomer in an aqueous medium so as to form an aqueous dispersion of carboxyl functional addition polymer followed by reacting this polymer dispersion with a diepoxide resin having an epoxide equivalent weight between 100 and 5000 to form the crosslinked polymer microgel particles.

2. A process as claimed in claim 1 which comprises two stages in which in the first stage the ethylenically unsaturated monomers are polymerised in the presence of the diepoxide resin, and in the second stage the diepoxide resin is reacted with the resulting non-crosslinked carboxyl functional addition polymer so as to form the crosslinked polymer microgel particles.

3. A process as claimed in claim 2 in which the ethylenically unsaturated monomers are premixed and added simultaneously to an aqueous polymerizing medium with the diepoxide resin along with surfactants and polymerizing initiators.

4. A process as claimed in claim 3 in which the diepoxide resin is dissolved in the mixture of ethylenically unsaturated monomers.

5. A process as claimed in claim 1 comprising three stages in which in the first stage the ethylenically unsaturated monomers are polymerised in the absence of the diepoxide resin so as to produce an aqueous dispersion of non-crosslinked carboxyl functional addition polymer, in the second stage a diepoxide resin is added and dispersed into the aqueous dispersion of non-crosslinked carboxyl functional addition polymer from the first stage and in the third stage the diepoxide resin is reacted with the addition polymer to produce the crosslinked polymer microgel particles.

6. A process as claimed in claim 5 in which a carboxyl functional acrylic-epoxy copolymer is mixed with the aqueous dispersion of carboxyl functional copolymer before it is reacted with the diepoxide resin.

7. A process as claimed in any one of claims 1 to 6 in which the ethylenically unsaturated monomers comprise by weight between 1% and 50% carboxyl functional monomers.

8. A process as claimed in any one of claims 1 to 7 in which the addition polymer has a theoretical acid value between 50 and 250.

9. A process as claimed in any one of claims 1 to 8 in which the diepoxide resin is a polyglycidyl ether of bisphenol A.

10. A process as claimed in any one of claims 1 to 9 in which the dispersion of crosslinked microgel particles contains by non-volatile weight between 40% and 99% carboxyl functional addition polymer based on the total amount of carboxyl functional addition polymer and diepoxide resin.

11. A process as claimed in any one of claims 1 to 10 in which microgel particles have a mean particles size below 5 µm.

12. A process as claimed in any one of claims 1 to 11 in which dispersion of crosslinked polymers microgel particles has an acid value above 30.

13. A process as claimed in any one of claims 1 to 12 also comprising adding base so as to neutralise at least some of the carboxyl groups on the addition polymer.

14. A process as claimed in claim 13 in which sufficient base is added to cause the composition to be pseudoplastic.

15. A process as claimed in claim 13 in which the amount of base is sufficient to neutralise between 50% and 100% of the carboxyl groups on the addition polymer.

16. A process as claimed in any one of claims 13 to 15 where the base is ammonia, an amine, or a mixture of ammonia and amine.

17. A process as claimed in claim 12 in which the base also acts as a catalyst for the reaction between the carboxyl functional addition polymer and the diepoxide resin.

18. A process as claimed in any one of claims 13 to 16 in which base is added after the diepoxide resin has been reacted with the carboxyl functional addition polymer.

## Patentansprüche

1. Verfahren zur Herstellung einer wäßrigen Anstrichzusammensetzung, die eine wäßrige Dispersion von intern vernetzten Polymermikrogel-Teilchen umfaßt, bei dem die Mikrogelteilchen durch Emulsionspolymerisation von ethylenisch ungesättigten Monomeren, zu denen ein Monomer mit Carboxylfunktionalität gehört, in einem wäßrigen Medium hergestellt werden, so daß eine wäßrige Dispersion eines Additionspolymers mit Carboxylfunktionalität gebildet wird, und diese Polymerdispersion anschließend mit einem Diepoxidharz, das ein Epoxid-Äquivalentgewicht zwischen 100 und 5000 aufweist, umgesetzt wird, um die vernetzten Polymermikrogel-Teilchen zu bilden.

2. Verfahren nach Anspruch 1, das zwei Stufen umfaßt, wobei in der ersten Stufe die ethylenisch ungesättigten Monomeren in Gegenwart des Diepoxidharzes polymerisiert werden, und in der zweiten Stufe das Diepoxidharz mit dem resultierenden unvernetzten Additionspolymer mit Carboxylfunktionalität umgesetzt wird, um so die vernetzten Polymermikrogel-Teilchen zu bilden.

3. Verfahren nach Anspruch 2, wobei die ethylenisch ungesättigten Monomeren vorgemischt und gleichzeitig mit dem Diepoxidharz sowie Tensiden und Polymerisationsinitiatoren zu einem wäßrigen Polymerisationsmedium zugesetzt werden.

4. Verfahren nach Anspruch 3, wobei das Diepoxidharz in der Mischung von ethylenisch ungesättigten Monomeren gelöst wird.

5. Verfahren nach Anspruch 1, das drei Stufen aufweist, wobei in der ersten Stufe die ethylenisch ungesättigten Monomeren in Abwesenheit des Diepoxidharzes polymerisiert werden, um auf diese Weise eine wäßrige Dispersion eines unvernetzten Additionspolymers mit Carboxylfunktionalität herzustellen, in der zweiten Stufe ein Diepoxidharz zugesetzt und in der wäßrigen Dispersion eines unvernetzten Additionspolymers mit Carboxylfunktionalität aus der ersten Stufe dispergiert wird, und in der dritten Stufe das Diepoxidharz mit dem Additionspolymer zur Umsetzung gebracht wird, um die vernetzten Polymermikrogel-Teilchen herzustellen.

6. Verfahren nach Anspruch 5, wobei ein Acryl-Epoxy-Copolymer mit Carboxylfunktionalität mit der wäßrigen Dispersion des Copolymers mit Carboxylfunktionalität vermischt wird, bevor es mit dem Diepoxidharz zur Umsetzung gebracht wird.

7. Verfahren nach irgendeinem der Ansprüche 1 bis 6, wobei die ethylenisch ungesättigten Monomeren zwischen 1 und 50 Gew.-% Monomere mit Carboxylfunktionalität enthalten.

8. Verfahren nach irgendeinem der Ansprüche 1 bis 7, wobei das Additionspolymer eine theoretische Säurezahl zwischen 50 und 250 aufweist.

9. Verfahren nach irgendeinem der Ansprüche 1 bis 8, wobei das Diepoxidharz ein Polyglycidylether von Bisphenol A ist.

10. Verfahren nach irgendeinem der Ansprüche 1 bis 9, wobei die Dispersion von vernetzten Mikrogelteilchen, als nichtflüchtiges Gewicht, zwischen 40 und 99% Additionspolymer mit Carboxylfunktionalität enthält, bezogen auf das Gesamtgewicht aus Additionspolymer und Carboxylfunktionalität und Diepoxidharz.

11. Verfahren nach irgendeinem der Ansprüche 1 bis 10, wobei die Mikrogelteilchen eine mittlere Teilchengröße unterhalb 5 µm aufweisen.

12. Verfahren nach irgendeinem der Ansprüche 1 bis 11, wobei die Dispersion aus vernetzten Polymermikrogel-Teilchen eine Säurezahl von mehr als 30 aufweist.

13. Verfahren nach irgendeinem der Ansprüche 1 bis 12, das außerdem die Zugabe einer Base umfaßt, um wenigstens einige der Carboxylgruppen an dem Additionspolymer zu neutralisieren.

14. Verfahren nach Anspruch 13, wobei ausreichend Base zugesetzt wird, um die Zusammensetzung pseudoplastisch zu machen.

15. Verfahren nach Anspruch 13, wobei die Menge an Base ausreicht, zwischen 50 und 90% der Carboxylgruppen an dem Additionspolymer zu neutralisieren.

16. Verfahren nach irgendeinem der Ansprüche 13 bis 15, wobei die Base Ammoniak, ein Amin oder eine Mischung aus Ammoniak und einem Amin ist.

17. Verfahren nach Anspruch 12, wobei die Base auch als Katalysator für die Reaktion zwischen dem Additionspolymer mit Carboxylfunktionalität und dem Diepoxidharz wirkt.

18. Verfahren nach irgendeinem der Ansprüche 13 bis 16, wobei Base zugesetzt wird, nachdem das Diepoxidharz mit dem Additionspolymer mit Carboxylfunktionalität umgesetzt wurde.

## Revendications

1. Procédé pour la production d'une composition aqueuse de revêtement comprenant une dispersion aqueuse de particules d'un microgel polymère à réticulation interne, dans lequel les particules de microgel sont produites par polymérisation en émulsion de monomères à insaturation éthylénique comprenant un monomère à fonctionnalité carboxyle dans un milieu aqueux de manière à former une dispersion aqueuse de polymère d'addition à fonctionnalité carboxyle, avec ensuite la réaction de cette dispersion de polymère avec une résine de diépoxyde ayant un poids équivalent d'époxyde de 100 à 5 000 pour former les particules de microgel polymère réticulé.

2. Procédé suivant la revendication 1, qui comprend deux étapes dans lesquelles, dans la première étape, les monomères à insaturation éthylénique sont polymérisés en présence de la résine de diépoxyde et, dans la seconde étape, la résine de diépoxyde est amenée à réagir avec le polymère d'addition à fonctionnalité carboxyle non réticulé résultant de manière à former les particules de microgel polymère réticulé.

3. Procédé suivant la revendication 2, dans lequel les monomères à insaturation éthylénique sont mélangés préalablement et ajoutés simultanément à un milieu aqueux de polymérisation avec la résine de diépoxyde, avec des agents tensioactifs et initiateurs de polymérisation.

4. Procédé suivant la revendication 3, dans lequel la résine de diépoxyde est dissoute dans le mélange de monomères à insaturation éthylénique.

5. Procédé suivant la revendication 1, comprenant trois étapes dans lesquelles, dans la première étape, les monomères à insaturation éthylénique sont polymérisés en l'absence de la résine de diépoxyde de manière à produire une dispersion aqueuse de polymère d'addition à fonctionnalité carboxyle non réticulé, dans la deuxième étape, une résine de diépoxyde est ajoutée et dispersée dans la dispersion aqueuse de polymère d'addition à fonctionnalité carboxyle non réticulé de la première étape et, dans la troisième étape, la résine de diépoxyde est amenée à réagir avec le polymère d'addition pour produire les particules de microgel polymère réticulé.

6. Procédé suivant la revendication 5, dans lequel un copolymère acrylique-époxy à fonctionnalité carboxyle est mélangé à la dispersion aqueuse de copolymère à fonctionnalité carboxyle avant sa réaction avec la résine de diépoxyde.

7. Procédé suivant l'une quelconque des revendications 1 à 6, dans lequel les monomères à insaturation éthylénique comprennent, en poids, 1 % à 50 % de monomères à fonctionnalité carboxyle.

8. Procédé suivant l'une quelconque des revendications 1 à 7, dans lequel le polymère d'addition a un indice d'acide théorique de 50 à 250.

9. Procédé suivant l'une quelconque des revendications 1 à 8, dans lequel la résine de diépoxyde est un éther de polyglycidyle de bisphénol A.

10. Procédé suivant l'une quelconque des revendications 1 à 9, dans lequel la dispersion de particules de microgel réticulé contient, en poids de matières non volatiles, 40 % à 99 % de polymère d'addition à fonctionnalité carboxyle sur la base de la quantité totale de polymères d'addition à fonctionnalité carboxyle et de résines de diépoxyde.

11. Procédé suivant l'une quelconque des revendications 1 à 10, dans lequel les particules de microgel ont un diamètre moyen de particule inférieur à 5 µm.

12. Procédé suivant l'une quelconque des revendications 1 à 11, dans lequel la dispersion de particules de microgel polymère réticulé a un indice d'acide supérieur à 30.

13. Procédé suivant l'une quelconque des revendications 1 à 12, comprenant également l'addition d'une base de manière à neutraliser au moins certains des groupes carboxyle sur le polymère d'addition.

14. Procédé suivant la revendication 13, dans lequel on ajoute une quantité de base suffisante pour rendre la composition pseudoplastique.

15. Procédé suivant la revendication 13, dans lequel la quantité de base est suffisante pour neutraliser 50 % à 100 % des groupes carboxyle sur le polymère d'addition.

16. Procédé suivant l'une quelconque des revendications 13 à 15, dans lequel la base est l'ammoniac, une amine ou un mélange d'ammoniac et d'une amine.

17. Procédé suivant la revendication 12, dans lequel la base joue également le rôle de catalyseur pour la réaction entre le polymère d'addition à fonctionnalité carboxyle et la résine de diépoxyde.

18. Procédé suivant l'une quelconque des revendications 13 à 16, dans lequel la base est ajoutée après la réaction de la résine de diépoxyde avec le polymère d'addition à fonctionnalité carboxyle.
